# EUROPÄISCHE PATENTSCHRIFT

(11) **EP 1 931 864 B1**
(45) Veröffentlichungstag und Bekanntmachung des Hinweises auf die Patenterteilung: **12.08.2009**
(21) Anmeldenummer: 06805948.4
(22) Anmeldetag: 29.09.2006
(51) Int. Cl.: F01N 3/20, B01D 53/94, F01N 3/08

(54) **VERFAHREN UND VORRICHTUNG ZUR REDUKTION DES STICKOXIDANTEILS IM ABGAS EINER VERBRENNUNGSKRAFTMASCHINE**
METHOD AND DEVICE FOR REDUCING THE NITROGEN OXIDE CONCENTRATION IN THE EXHAUST GAS OF AN INTERNAL COMBUSTION ENGINE
PROCEDE ET DISPOSITIF DE REDUCTION DE LA FRACTION D'OXYDE D'AZOTE DANS LES GAZ D'ECHAPPEMENT D'UN MOTEUR A COMBUSTION INTERNE

(30) Priorität: 06.10.2005 DE 102005048117
(43) Veröffentlichungstag der Anmeldung: 18.06.2008
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2006/009467
(87) Internationale Veröffentlichungsnummer: WO 2007/039240

(56) Entgegenhaltungen:
- EP-A- 0 617 199
- WO-A-96/04980
- DE-A1- 4 315 278
- DE-A1- 10 043 798
- DE-A1- 10 233 665
- DE-A1- 19 931 007
- DE-C1- 19 901 915

## Beschreibung

Gegenstand der vorliegenden Erfindung ist ein Verfahren und eine Vorrichtung zur Reduktion des Stickoxidanteils im Abgas einer Verbrennungskraftmaschine. Bevorzugt kann die Erfindung bei der Aufbereitung von Abgasen in Automobilen eingesetzt werden.

Weltweit sind in vielen Staaten gesetzliche Regelungen getroffen worden, die einen oberen Grenzwert für den Gehalt von bestimmten Substanzen im Abgas von Verbrennungskraftmaschinen festlegen. Hierbei handelt es sich zumeist um Substanzen, deren Abgabe an die Umwelt unerwünscht ist. Eine dieser Substanzen stellen Stickoxide (NOₓ) dar, deren Anteil im Abgas gesetzlich festgelegte Grenzwerte nicht übersteigen darf. Auf Grund der Rahmenbedingungen, beispielsweise der auslegung der Verbrennungskraftmaschinen im Hinblick auf einen günstigen Verbrauch und ähnliches, ist die innermotorische Vermeidung der Stickoxidemission bei der Verminderung des Anteils der Stickoxide im Abgas nur begrenzt tauglich, so dass für die Einhaltung relativ niedriger Grenzwerte eine Abgasnachbehandlung erforderlich ist. Hierbei hat sich herausgestellt, dass eine selektive katalytische Reduktion (SCR, selective catalytic reduction) der Stickoxide vorteilhaft ist. Diese SCR-Methode benötigt ein Reduktionsmittel, welches stickstoffhaltig ist. Insbesondere hat sich der Einsatz von Ammoniak (NH₃) als Reduktionsmittel als eine mögliche Alternative herausgestellt. Es erfolgt eine Reduktion der Stickoxide zu molekularem Stickstoff bei gleichzeitigem Verbrauch des Reduktionsmittels. Die selektive katalytische Reduktion läuft üblicherweise im Abgas beim Durchströmen eines entsprechend gestalteten Katalysator-Trägerkörpers ab. Dieser ist dabei üblicherweise mit katalytisch aktivem Material versehen, beispielsweise in Form einer entsprechende katalytisch aktive Substanzen enthaltende Beschichtung. Solche Beschichtungen weisen ein Speichervermögen für das Reduktionsmittel, insbesondere Ammoniak, auf. Üblicherweise wird dieses Speichervermögen nicht bei der Regelung der Bereitstellung von Reduktionsmittel berücksichtigt, so dass es zur Abgabe von nicht umgesetzten Stickoxiden oder von Reduktionsmittel an die Umwelt kommen kann.

Aus der DE-A1-100 43 798 ist ein Verfahren zum Betrieb eines Katalysators zur selektiven katalytischen Reduktion von Stickoxiden bekannt. Hier werden eine Katalysatortemperatur und eine im Katalysator gespeicherte Reduktionsmittelmenge überwacht. Bei einem zu erwartenden Temperaturanstieg im Katalysator wird die bei dieser Temperatur im Katalysator speicherbare Reduktionsmittelmenge ermittelt. Bei Vorliegen eines nicht speicherbaren Reduktionsmittelüberschusses bei der zu erwartenden Temperatur wird dieser Überschuss abgebaut.

Hiervon ausgehend liegt der Erfindung die Aufgabe zugrunde, ein Verfahren und eine Vorrichtung zur Reduzierung der im Abgas einer Verbrennungskraftmaschine vorhandenen Stickoxide anzugeben, welches die Wahrscheinlichkeit einer Abgabe des Reduktionsmittels an die Umwelt verringert oder diese verhindert.

Diese Aufgabe wird gelöst durch ein Verfahren und eine Vorrichtung mit den Merkmalen der jeweiligen unabhängigen Ansprüche. Die jeweiligen abhängigen Ansprüche sind auf vorteilhafte Weiterbildungen gerichtet.

Das erfindungsgemäße Verfahren zur Reduktion des Stickoxidanteils im Abgas einer Verbrennungskraftmaschine durch eine selektive katalytische Reduktion an einem Reduktionskatalysator, für die ein Reduktionsmittel zumindest diskontinuierlich bereitgestellt wird, beruht darauf, dass bei der Ermittlung der bereitzustellenden Menge des Reduktionsmittels ein Speichervermögen des Reduktionskatalysators für das Reduktionsmittel und die Abhängigkeit dieses Speichervermögens von der Temperatur des Reduktionskatalysators berücksichtigt wird.

Unter einem Reduktionskatalysator wird eine Struktur verstanden, die die selektive katalytische Reduktion der Stickoxide katalysierende katalytische Substanzen aufweist. Diese Beschichtung umfasst beispielsweise Titandioxid(Anatas)-getragenes Vanadium/Wolframmischoxid oder Metallausgetauschte Zeolithe, vorzugsweise Eisenzeolithe. Die Struktur kann einen Wabenkörper beispielsweise aus Keramik umfassen, in die insbesondere die katalytischen Substanzen eingelagert sind oder auch einen Wabenkörper, der aus mindestens einer metallischen Lage, beispielsweise einer Blechfolie und/oder einer aus einem porösen metallischen Material hergestellten metallischen Lage, aufgebaut ist. Die Wabenkörper umfassen für ein Abgas durchströmbare Hohlräume. Der Wabenkörper kann eine entsprechende Beschichtung, beispielsweise einen keramischen Washcoat, mit den katalytischen Substanzen aufweisen. Als Reduktionsmittel wird bevorzugt Ammoniak (NH₃) eingesetzt. Unter dem Speichervermögen wird die Menge an Reduktionsmittel verstanden, die in die Beschichtung und/oder den Wabenkörper, eingelagert werden und insbesondere in oder an dieser adsorbiert, bevorzugt physi- und/oder chemisorbiert werden kann. Unter einer zumindest diskontinuierlichen Bereitstellung wird eine Bereitstellung verstanden, die diskontinuierlich oder kontinuierlich erfolgen kann. Die Bereitstellung umfasst insbesondere die Zugabe eines Reduktionsmittelvorläufers, welcher zu Reduktionsmittel reagiert, die Zugabe von Reduktionsmittel und die Erzeugung eines Reduktionsmittelvorläufers und/oder Reduktionsmittels aus im Abgas vorhandenen Stoffen.

Üblicherweise sinkt das Speichervermögen für Reduktionsmittel des Reduktionskatalysators mit steigender Temperatur, so dass es bei steigender Temperatur des Reduktionskatalysators ohne das erfindungsgemäße Verfahren zu einer Desorption von Reduktionsmittel aus den Reduktionskatalysator kommen kann. Da aber die Temperatur des Reduktionskatalysators bestimmbar, bevorzugt messund/oder berechenbar ist, kann eine zukünftige Temperatur des Reduktionskatalysators berechnet werden, so dass die bereitzustellende Menge an Reduktionsmittel angepasst werden kann. Unter einer Anpassung wird insbesondere eine Verringerung der bereitzustellenden Menge an Reduktionsmittel verstanden. Die Bereitstellung einer verringerten Menge an Reduktionsmittel als für die vollständige Umsetzung der Stickoxide nötig führt grundsätzlich nicht zu einer Emission von Stickoxiden in die Umwelt, wenn Reduktionsmittel im Reduktionskatalysator eingelagert ist. Aufgrund der hohen Affinität der Stickoxide zum Reduktionsmittel, insbesondere zu Ammoniak, wird dieses aus dem Reduktionskatalysator herausgelöst und kann mit dem Stickoxid reagieren.

Beispielsweise führt die Regeneration eines Partikelabscheiders, insbesondere eines geschlossenen Partikelfilters, eines Nebenstromfilters und/oder eines elektrostatischen Partikelabscheiders, aufgrund der Oxidation des Kohlenstoffs der Partikel zu einer erhöhten Temperatur des Abgases. Liegt der Reduktionskatalysator stromabwärts des Partikelabscheiders, erhöht sich damit auch die Temperatur dieses Reduktionskatalysators. Aufgrund der erhöhten Temperatur sinkt das Speichervermögen des Reduktionskatalysators, so dass dann, wenn die eingelagerte Menge an Reduktionsmittel oberhalb des verringerten Speichervermögens liegt, die Differenz dieser Menge zum Speichervermögen bei der aktuellen Temperatur abgegeben, insbesondere desorbiert wird. Hierdurch kommt es zu einer ungewollten Freisetzung von Reduktionsmittel an die Umwelt. Erfindungsgemäß wird jedoch die Temperaturabhängigkeit des Speichervermögens berücksichtigt. Beispielsweise bedeutet dies, dass dann, wenn der Partikelabscheider regenerationsbedürftig ist, also beispielsweise die Beladung des Partikelabscheiders oberhalb eines Grenzwertes liegt, nicht direkt eine Regeneration durchgeführt wird, sondern zunächst berechnet wird, welcher Temperaturverlauf im Reduktionskatalysator aufgrund der Regeneration zu erwarten ist. Hierbei wird insbesondere auch die Menge an zu oxidierendem Kohlenstoff berücksichtigt. Aufgrund des Temperaturverlaufs wird die Menge an Reduktionsmittel berechnet, die aus dem Reduktionskatalysator freigesetzt wird. Diese Menge wird dann bei der Bereitstellung von Reduktionsmittel berücksichtigt, insbesondere wird über einen Zeitraum bis zur Durchführung der Regeneration die im Abgassystem bereitzustellende Menge an Reduktionsmittel reduziert. Die Regeneration wird insbesondere erst dann durchgeführt, wenn die im Reduktionskatalysator gespeicherte Menge an Reduktionsmittel kleiner oder gleich dem Speichervermögen des Reduktionskatalysators bei der maximalen am Reduktionskatalysator während der Regeneration vorliegenden Temperatur ist.

Beim Absinken der Temperatur, also mit steigendem Speichervermögen für Reduktionsmittel, kann die bereitzustellende Menge an Reduktionsmittel so erhöht werden, dass trotz der Einlagerung von Reduktionsmittel in den Reduktionskatalysator eine möglichst vollständige Umsetzung der Stickoxide im Abgas erfolgt. Erreicht die Menge des im Reduktionskatalysator eingelagertem Reduktionsmittels das Speichervermögen bei der entsprechenden Temperatur, so kann die Menge an bereitzustellendem Reduktionsmittel wiederum auf die Menge reduziert werden, die zur Umsetzung der im Abgas vorhandenen Stickoxide benötigt wird.

Alternativ oder zusätzlich dazu, dass bei der Bereitstellung des Reduktionsmittels ein Speichervermögen des Reduktionskatalysators und die Abhängigkeit dieses Speichervermögens von der Temperatur des Reduktionskatalysators berücksichtigt wird, kann auch stromabwärts des Reduktionskatalysators ein Oxidationskatalysator ausgebildet sein, der das durch den Reduktionskatalysator durchtretende Reduktionsmittel oxidiert. Bevorzugt ist dieser Oxidationskatalysator so dimensioniert, dass die Menge an Reduktionsmittel, die vom Reduktionskatalysator bei einem Temperatursprung von der normalen Betriebstemperatur zur bei der Regeneration eines Partikelabscheiders anliegenden erhöhten Temperatur im Reduktionskatalysator sicher umgesetzt werden kann, so dass auch dann das Austreten von Reduktionsmittel an die Umwelt verhindert werden kann.

Erfindungsgemäß wird ein zukünftiger Verlauf der Temperatur des Reduktionskatalysators berechnet.

Die Berechnung des zukünftigen Verlaufs der Temperatur des Reduktionskatalysators kann Messwerte der Temperatur des Reduktionskatalysators und/oder an anderen Stellen des Abgassystems der Verbrennungskraftmaschine berücksichtigen. Alternativ oder zusätzlich kann auf Steuerungsdaten zurückgegriffen werden, beispielsweise auf ein Kennfeld der Verbrennungskraftmaschine oder ähnliches. Die Berechnung kann auch zukünftige Ereignisse wie beispielsweise die Regeneration eines Partikelabscheiders berücksichtigen. Die Berechnung kann eine reine Extrapolation der aktuellen Situation oder auch auf Basis früherer Daten erstellte Modelle umfassen, die beispielsweise übliche Fahrweisen des Fahrers berücksichtigen.

Gemäß einer weiteren vorteilhaften Ausgestaltung des erfindungsgemäßen Verfahrens wird bei einer erwarteten Erhöhung der Temperatur des Reduktionskatalysators die daraus resultierende Menge an Reduktionsmittel berechnet, die aus dem Reduktionskatalysator freigesetzt würde und diese resultierende Menge bei der Bereitstellung des Reduktionsmittels berücksichtigt. Die resultierende Menge kann beispielsweise als Differenz des Speichervermögens bei der niedrigeren Temperatur und dem Speichervermögen bei der höheren Temperatur berechnet werden. Angepasst an die Menge Stickoxide im Abgas, die gemessen und/oder beispielsweise aus dem Motorkennfeld der Verbrennungskraftmaschine berechnet werden kann, kann beispielsweise die Bereitstellung des Reduktionsmittels so lange ausgesetzt oder verringert werden, bis die nötige Menge an Reduktionsmittel aus dem Reduktionskatalysator freigegeben worden ist.

Gemäß einer weiteren vorteilhaften Ausgestaltung des erfindungsgemäßen Verfahrens wird der zeitliche Verlauf der Freisetzung an Reduktionsmittel berechnet.

Aus dem Temperaturverlauf am Reduktionskatalysator ist der zeitliche Verlauf des Speichervermögens und damit auch der zeitliche Verlauf der Freisetzung an Reduktionsmittel einfach berechenbar. Dieser Verlauf kann bei der Bereitstellung des Reduktionsmittels berücksichtigt werden, in dem beispielsweise für die Zeitpunkte, bei denen eine Freisetzung zu erwarten ist, entsprechend die bereitzustellende Menge an Reduktionsmittel reduziert wird.

Gemäß einer weiteren vorteilhaften Ausgestaltung des erfindungsgemäßen Verfahrens wird der zeitliche Verlauf der Freisetzung bei der Bestimmung der bereitzustellenden Menge an Reduktionsmittel berücksichtigt.

Insbesondere dann, wenn ein langsamer Temperaturanstieg vorliegt oder erwartet wird, kann das aus dem Reduktionskatalysator freigesetzte Reduktionsmittel auch zum Zeitpunkt der Freisetzung zur Umsetzung der Stickoxide eingesetzt werden, so dass im Vorhinein eine geringere Reduktion der bereitzustellenden Menge an Reduktionsmittel erfolgen kann.

Gemäß einer weiteren vorteilhaften Ausgestaltung des erfindungsgemäßen Verfahrens wird bei einer erwarteten Senkung der Temperatur des Reduktionskatalysators die in den Reduktionskatalysator einzulagernde Menge an Reduktionsmittel berechnet und bei der Bereitstellung von Reduktionsmittel berücksichtigt.

In einem solchen Fall kann also für eine kurze Zeit die bereitgestellte Menge Reduktionsmittel erhöht werden, so dass trotz einer Einlagerung des Reduktionsmittels in den Reduktionskatalysator eine im wesentlichen vollständige Umsetzung der im Abgas vorhandenen Stickoxide erfolgt.

Gemäß einer weiteren vorteilhaften Ausgestaltung des erfindungsgemäßen Verfahrens wird der zeitliche Verlauf der Einlagerung an Reduktionsmittel berechnet.

Gemäß einer weiteren vorteilhaften Ausgestaltung des erfindungsgemäßen Verfahrens wird der zeitliche Verlauf der Einlagerung bei der Bestimmung der bereitzustellenden Menge an Reduktionsmittel berücksichtigt.

So kann die bereitzustellende Menge an Reduktionsmittel so bestimmt werden, dass zu jedem Zeitpunkt das Reduktionsmittel mit Stickoxiden reagiert und in den Reduktionskatalysator eingelagert wird, nicht jedoch ohne Reaktion durch den Reduktionskatalysator durchtritt.

Gemäß einer weiteren vorteilhaften Ausgestaltung des erfindungsgemäßen Verfahrens wird die Temperatur des Reduktionskatalysators auf mindestens eine der folgenden Arten bestimmt:
- Messung der Temperatur des Reduktionskatalysators und
- Berechnung der Temperatur des Reduktionskatalysators.

Die Temperatur kann mit üblichen Messfühlern gemessen werden. Die Temperatur des Reduktionskatalysators kann anhand verschiedener Daten berechnet werden. Bei der erfindungsgemäßen Berechnung der Temperatur des Reduktionskatalysators is mindestens eine der folgenden Informationen zu Berücksichtigen:
- eine gemessene Temperatur stromaufwärts des Reduktionskatalysators;
- eine gemessene Temperatur stromabwärts des Reduktionskatalysators;
- aktuelle Betriebsdaten der Verbrennungskraftmaschine;
- Betriebsdaten der Verbrennungskraftmaschine aus der Vergangenheit;
- ein Regenerationsverhalten eines Partikelabscheiders; und
- eine Beladung eines Partikelabscheiders.

Insbesondere bei bekannten Strömungsverhältnissen im Abgassystem kann anhand eines Motorkennfeldes der Verbrennungskraftmaschine gegebenenfalls unter Berücksichtigung eines oder mehrerer gemessener Temperaturwerte die Temperatur des Reduktionskatalysators bestimmt werden. Weiterhin können beispielsweise die Charakteristiken anderer Komponenten im Abgassystem berücksichtigt werden, beispielsweise die Aufheizung des Abgases, wenn ein stromaufwärts des Reduktionskatalysators liegender anderer Katalysator seine Anspringtemperatur ("light off"-Temperatur) erreicht hat. Unter einem Regenerationsverhalten eines Partikelabscheiders wird insbesondere die erreichte Temperatur des Abgases während der Regeneration, die räumliche Temperaturverteilung im Partikelabscheider und ähnliches verstanden. Unter der Beladung wird die Gesamtmasse der einund/oder abgelagerten Partikel auf und/oder in dem Partikelabscheider verstanden. Grundsätzlich kann ein Partikelabscheider beispielsweise einen geschlossener Partikelfilter, einen Nebenstromfilter und/oder einen elektrostatischen Partikelabscheider umfassen. Bevorzugt ist jedoch grundsätzlich die Ausbildung des Partikelabscheiders als geschlossener Partikelfilter insbesondere mit wechselweise geschlossenen Kanälen.

Gemäß des erfindungsgemäßen Verfahrens wird eine Regeneration eines Partikelabscheiders durchgeführt, wenn die im Reduktionskatalysator gespeicherte Menge an Reduktionsmittel kleiner oder gleich dem Speichervermögen bei der maximalen durch die Regeneration erzeugten Temperatur im Reduktionskatalysator ist.

Gemäß einer weiteren vorteilhaften Ausgestaltung des erfindungsgemäßen Verfahrens wird das Reduktionsmittel auf mindestens eine der folgenden Arten bereitgestellt:
- Zugabe und zumindest teilweise Umsetzung eines Reduktionsmittelvorläufers zu Reduktionsmittel;
- Zugabe des Reduktionsmittels;
- Erzeugen und zumindest teilweise Umsetzung eines Reduktionsmittelvorläufers zu Reduktionsmittel und
- Erzeugen des Reduktionsmittels.

Unter einem Reduktionsmittelvorläufer wird ein Stoff verstanden, der in das Reduktionsmittel umgewandelt werden oder dieses freisetzen kann. Beispielsweise stellt Harnstoff einen Vorläufer für das Reduktionsmittel Ammoniak dar, der zu Ammoniak hydrolysiert werden kann. Diese Hydrolyse kann beispielsweise in und/oder an einem entsprechend beschichteten Hydrolysekatalysator stattfinden, der stromaufwärts des Reduktionskatalysators angeordnet ist. Harnstoff kann beispielsweise in Form einer wässrigen Lösung und/oder als Feststoff zugegeben werden. Weitere Reduktionsmittelvorläufer für das Reduktionsmittel Harnstoff sind beispielsweise Isocyansäure, Cyanursäure und Ammoniumcarbamat. Unter einer Erzeugung eines Reduktionsmittels und/oder eines Reduktionsmittelvorläufers wird insbesondere eine Reaktion verstanden, bei der ein Reduktionsmittel und/oder ein Reduktionsmittelvorläufer ohne Zugabe von weiteren Substanzen allein aus im Abgas enthaltenen Substanzen erzeugt wird. Beispielsweise kann Ammoniak über die Erzeugung von Stickstoffmonoxid, insbesondere mittels eines Plasmagenerators, und anschließende Reduktion des Stickstoffmonoxids durch ein wasserstoffhaltiges Gas erzeugt werden.

Gemäß einem weiteren Aspekt der vorliegenden Erfindung wird eine Vorrichtung zur Reduktion des Stickoxidanteils im Abgas einer Verbrennungskraftmaschine vorgeschlagen, zumindest umfassend einen Reduktionskatalysator und eine Steuereinrichtung, wobei die Steuereinrichtung geeignet und bestimmt ist, das erfindungsgemäße Verfahren durchzuführen.

Gemäß der erfindungsgemäßen Vorrichtung ist weiterhin einen Partikelabscheider umfasst. Besonders bevorzugt ist hierbei die Ausbildung des Partikelabscheiders als geschlossener Filter, welcher beispielsweise wechselweise verschlossene Kanäle aufweist. Bevorzugt ist die Steuereinrichtung so ausgebildet, dass die Menge an bereitzustellendem Reduktionsmittel vor Durchführung einer Regeneration des Partikelabscheiders reduziert wird, um zunächst die im Reduktionskatalysator gespeicherte Menge an Reduktionsmittel freizusetzen, um so eine Abgase von Reduktionsmittel bei der sprunghaften Erhöhung der Temperatur des Reduktionskatalysators aufgrund der Regeneration des Partikelabscheiders zu verhindern.

Die für das erfindungsgemäße Verfahren offenbarten Details und Vorteile sind auf die erfindungsgemäße Vorrichtung übertrag- und anwendbar und umgekehrt. Im folgenden wird die Erfindung an Hand der beigefügten Figuren näher erläutert, ohne dass die Erfindung auf die dort offenbarten Details beschränkt wäre. Es zeigen:
- Fig. 1: schematisch ein Ausführungsbeispiel einer erfindungsgemäßen Vorrichtung;
- Fig. 2: schematisch einen zeitlichen Verlauf einer in einem Reduktionskatalysator gespeicherten Menge Reduktionsmittel; und
- Fig. 3: schematisch mehrere zeitliche Verläufe der bereitzustellenden Menge an Reduktionsmittel.

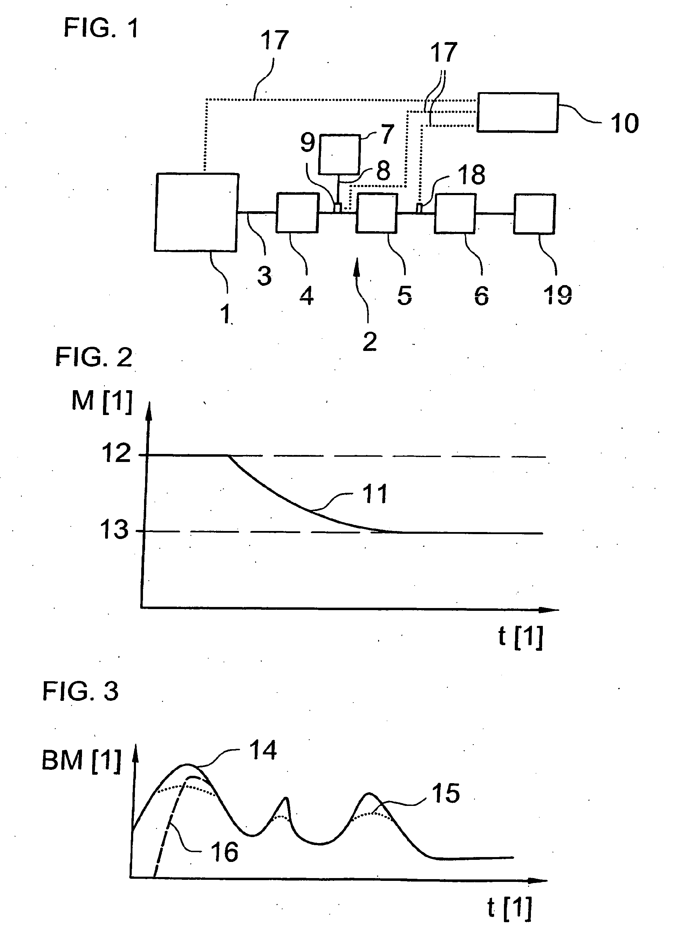

Fig. 1 zeigt schematisch ein Ausführungsbeispiel einer erfindungsgemäßen Vorrichtung, anhand der das erfindungsgemäße Verfahren erläutert werden soll. Eine Verbrennungskraftmaschine 1 ist mit einem Abgassystem 2 verbunden, in das die Abgase der Verbrennungskraftmaschine 1 geleitet werden. Das Abgassystem 2 umfasst in vorliegendem Ausführungsbeispiel Abgasleitungen 3, einen geschlossenen Partikelfilter 4, einen Hydrolysekatalysator 5 und einen Reduktionskatalysator 6. Der geschlossene Partikelfilter 4 besteht beispielsweise aus einem Wabenkörper mit wechselweise verschlossenen Kanälen, so dass das Abgas zwischen den Kanälen liegende poröse Wände durchströmen muss. Um die Effizienz des Partikelfilters 4 zu erhalten, erfolgt regelmäßig eine Regeneration des Partikelfilters 4. Hierzu werden beispielsweise die auf und/oder im Partikelfilter 4 gelagerten Russpartikel oxidiert. Dies kann durch eine Erhöhung der Abgastemperatur durch einen stromaufwärts des Partikelfilters 4 gelegenen nicht gezeigten Oxidationskatalysator erreicht werden, in dem die Verbrennungskraftmaschine 1 mit einem Überschuss an Kraftstoff betrieben wird, so dass Kohlenwasserstoffe die Verbrennungskraftmaschine 1 passieren und an dem Oxidationskatalysator umgesetzt werden, so dass es zu einer entsprechenden Steigerung der Temperatur des Abgases kommt. Wird die Temperatur über die Starttemperatur der auf dem Partikelfilter 4 katalysierten Oxidation des Kohlenstoffs gesteigert, oxidiert dieser Kohlenstoff exotherm, so dass sich die Temperatur des Abgases weiter erhöht.

Der Reduktionskatalysator 5 weist katalytisch aktive Substanzen auf, die die selektive katalytische Reduktion von Stickoxiden (NOₓ) zu Stickstoff (N₂) katalysieren. Im Ausführungsbeispiel wird Ammoniak als Reduktionsmittel und Harnstoff als Reduktionsmittelvorläufer eingesetzt. In einem Harnstofftank 7 wird Harnstoff ((NH₂)₂CO), beispielsweise als wässrige Harnstofflösung und/oder als Feststoff bevorratet und über eine Zuleitung 8 zu einer Harnstoffzugabe 9 transportiert. Die Harnstoffzugabe 9 ist im Falle einer wässrigen Harnstofflösung beispielsweise als Düse ausgebildet. Über die Harnstoffzugabe 9 wird der Harnstoff in die Abgasleitung 3 stromaufwärts des Hydrolysekatalysators 5 gegeben. Der Hydrolysekatalysator 5 umfasst eine mit einer entsprechenden katalytisch aktiven Beschichtung versehene Struktur. Auf und/oder an dem Hydrolysekatalysator 5 erfolgt eine Thermo- und/oder Hydrolyse des Harnstoffs zu Ammoniak und Kohlendioxid. Das so entstehende Ammoniak wird mit dem Abgas zum Reduktionskatalysator 6 transportiert und reagiert dort mit im Abgas enthaltenen Stickoxiden.

Weiterhin ist eine Steuereinrichtung 10 ausgebildet. Diese Steuereinrichtung 10 ermittelt die bereitzustellende Menge an Reduktionsmittel und steuert die Harnstoffzugabe 9 entsprechend an. Der Reduktionskatalysator 6 umfasst einen aus metallischen Lagen aufgebauten Wabenkörper, der für Abgas durchströmbare Hohlräume bildet, die von den Lagen gebildet werden. Der Wabenkörper ist mit einer keramischen Beschichtung, einem Washcoat, versehen, die entsprechende katalytisch aktive Substanzen aufweist, die feinverteilt in dem Washcoat vorliegen. In dem Washcoat können Ammoniakmoleküle physi- und/oder chemisorbiert werden, so dass der Reduktionskatalysator 6 bei einer gegebenen Temperatur ein Speichervermögen für Ammoniak aufweist.

Fig. 2 zeigt eine Masse M des im Reduktionskatalysator 6 gespeicherten Ammoniak im zeitlichen Verlauf 11. Sowohl die Zeit t als auch die Masse M sind in willkürlichen Einheiten angegeben. Bei einer ersten Temperatur T1 weist der Reduktionskatalysator 6 ein erstes Speichervermögen 12 auf, während das zweite Speichervermögen 13 bei einer zweiten höheren Temperatur T2 niedriger als das erste Speichervermögen 12 ist. Erhöht sich die Temperatur des Reduktionskatalysators 6 von der ersten T1 zur zweiten Temperatur T2, so erfolgt eine Desorption des gespeicherten Ammoniak, der unverbraucht an die Umwelt abgegeben wird. Erfindungsgemäß wird dem entgegengewirkt, in dem vor Erreichen der Temperatur T2 eine kontrollierte Desorption des Ammoniak aus dem Reduktionskatalysator 6 herbeigeführt wird, wie der zeitliche Verlauf 11 in Fig. 2 zeigt. Dies wird erfindungsgemäß dadurch erreicht, dass statt der für eine stöchiometrische Umsetzung der Stickoxide ohne Berücksichtigung des Speichervermögens benötigten Menge an Ammoniak eine geringere Menge an Ammoniak zugegeben wird. Dies führt zur Desorption eines Teils des im Reduktionskatalysator 6 gespeicherten Ammoniaks, so dass trotz einer verringerten bereitgestellten Menge an Ammoniak die Stickoxide im wesentlichen vollständig umgesetzt werden, gleichzeitig jedoch die Menge des im Reduktionskatalysator 6 gespeicherten Ammoniaks verringert wird. Wird dann die Temperatur auf die Temperatur T2 erhöht, so ist die gespeicherte Menge an Ammoniak kleiner oder gleich dem zweiten Speichervermögen 13, so dass es nicht zu einer unkontrollierten Abgabe von Ammoniak an die Umwelt kommt.

Fig. 3 verdeutlicht diesen Vorgang. Fig. 3 zeigt schematisch zeitliche Verläufe der bereitzustellenden Menge BM an Ammoniak. Sowohl die bereitzustellende Menge BM als auch die Zeit t sind in willkürlichen Einheiten angegeben. Zur stöchiometrischen Umsetzung der Stickoxide im Abgas ohne Berücksichtigung der Speicherfähigkeit des Reduktionskatalysators 6 ist die Zugabe einer ersten Menge 14 Ammoniak über die Zeit t erforderlich. Der zeitliche Verlauf der ersten Menge 14 ist durchgezogen eingezeichnet. Statt der ersten Menge 14 wird jedoch eine zweite Menge 15 (gepunktet gezeichnet) oder eine dritte Menge 16 (gestrichelt gezeichnet) Ammoniak zugegeben. Die zeitlichen Verläufe der zweiten 15 und dritten Menge 16 an Ammoniak liegen in Teilbereichen unterhalb des Verlaufs der ersten Menge 14. Die hier fehlende Menge an Ammoniak wird durch aus dem Reduktionskatalysator 6 desorbiertes Ammoniak ergänzt.

Die Menge an bereitzustellendem Ammoniak und deren zeitlicher Verlauf wird in der Steuereinrichtung 10 bestimmt. Diese ist über Datenleitungen 17 mit der Harnstoffzugabe 9, sowie im Ausführungsbeispiel mit der Verbrennungskraftmaschine 1 und einem Temperaturfühler 18, der stromaufwärts des Reduktionskatalysators 6 in Kontakt mit der Abgasleitung 3 ausgebildet ist, verbunden. Anhand der Daten der Motorsteuerung, die ebenfalls in der Steuereinrichtung 10 integriert sein kann und anhand der Daten des Temperaturfühlers 18 kann die Steuereinrichtung 10 die aktuelle Temperatur des Reduktionskatalysators 6 berechnen. Weiterhin kann der zukünftige Verlauf der Temperatur des Reduktionskatalysators 6 berechnet werden, beispielsweise auch unter Berücksichtigung einer zukünftigen durchzuführenden Regeneration des Partikelfilters 4. So kann beispielsweise die erste Temperatur T1 des oben angegebenen Beispiels die aktuelle Temperatur des Reduktionskatalysators 6 und T2 die höchste während und/oder nach einer Regeneration des Partikelfilters 4 zu erwartende Temperatur des Reduktionskatalysators 6 darstellen. In diesem Falle kann wirksam vermieden werden, dass nicht umgesetztes Ammoniak aufgrund der durch die Regeneration des Partikelfilters 6 erhöhten Temperatur an die Umwelt abgegeben wird. Dies verringert den Ammoniakverbrauch in vorteilhafter Weise.

Stromabwärts des Reduktionskatalysators 6 ist ein Oxidationskatalysator 19 ausgebildet. Sollte doch Reduktionsmittel durch den Reduktionskatalysator 6 durchtreten, wird dieses auf dem Oxidationskatalysator oxidiert und gelangt somit nicht in die Umwelt. Die Kapazität des Oxidationskatalysators 19 zur Umsetzung von Reduktionsmittel kann in vorteilhafter Weise alternativ oder zusätzlich an die Differenz der Speichervermögen bei normaler Betriebstemperatur und der höchsten zu erwartenden Temperatur, beispielsweise im Rahmen einer Regeneration des Partikelfilters 4, angepasst werden, so dass gewährleistet ist, dass auch ohne die erfindungsgemäße vorhergehende Reduktion der Menge des bereitzustellenden Ammoniaks ein Durchbruch des Ammoniak an die Umwelt vermieden wird.

Das erfindungsgemäße Verfahren erlaubt die Anpassung der bereitzustellenden Menge an Reduktionsmittel an die zukünftige Temperatur des Reduktionskatalysators 6 und an das Speichervermögen 12, 13 bei dieser Temperatur. Hierdurch kann beispielsweise verhindert werden, dass Reduktionsmittel aus dem Reduktionskatalysator 6 desorbiert, wenn die Temperatur des Reduktionskatalysators 6 erhöht wird, beispielsweise durch eine Regeneration des Partikelfilters 4. Hierzu wird im Vorfeld der Regeneration des Partikelfilters 4 statt einer für die stöchiometrische Umsetzung der Stickoxide im Abgas ohne Berücksichtigung des Speichervermögens 12, 13 nötigen ersten Menge 14 an Reduktionsmittel eine verringerte Menge 15, 16 an Reduktionsmittel bereitgestellt.

### Bezugszeichenliste

- 1: Verbrennungskraftmaschine
- 2: Abgassystem
- 3: Abgasleitung
- 4: Partikelfilter
- 5: Hydrolysekatalysator
- 6: Reduktionskatalysator
- 7: Harnstofftank
- 8: Zuleitung
- 9: Harnstoffzugabe
- 10: Steuereinrichtung
- 11: zeitlicher Verlauf
- 12: erstes Speichervermögen
- 13: zweites Speichervermögen
- 14: erste Menge Ammoniak
- 15: zweite Menge Ammoniak
- 16: dritte Menge Ammoniak
- 17: Datenleitung
- 18: Temperaturfühler
- 19: Oxidationskatalysator

## Patentansprüche

1. Verfahren zur Reduktion des Stickoxidanteils im Abgas einer Verbrennungskraftmaschine (1) durch eine selektive katalytische Reduktion an einem Reduktionskatalysator (6), für die ein Reduktionsmittel zumindest diskontinuierlich bereitgestellt wird, **dadurch gekennzeichnet, dass** bei Ermittlung der bereitzustellenden Menge (14, 15, 16) des Reduktionsmittels ein Speichervermögen (12, 13) des Reduktionskatalysators (6) fur das Reduktionsmittel und die Abhängigkeit dieses Speichervermögens (12, 13) von der Temperatur des Reduktionskatalysators (6) berücksichtigt wird und bei dem die zukünftige Temperatur des Reduktionskatalysators (6) berechnet wird unter Berücksichtigung mindestens einer der folgenden Informationen:
- ein Regenerationsverhalten eines Partikelabscheiders (4); und
- eine Beladung eines Partikelabscheiders (4),
wobei eine Regeneration des Partikelabscheiders (4) durchgeführt wird, wenn die im Reduktionskatalysator (6) gespeicherte Menge an Reduktionsmittel kleiner oder gleich dem Speichervermögen (12, 13) bei der maximalen durch die Regeneration erzeugten Temperatur im Reduktionskatalysator (6) ist.

2. Verfahren nach Anspruch 1, bei dem bei einer erwarteten Erhöhung der Temperatur des Reduktionskatalysators (6) die daraus resultierende Menge an Reduktionsmittel berechnet, die aus dem Reduktionskatalysator (6) freigesetzt wird und diese resultierende Menge bei der Bereitstellung des Reduktionsmittels berücksichtigt wird.

3. Verfahren nach Anspruch 2, bei dem der zeitliche Verlauf der Freisetzung an Reduktionsmittel berechnet wird.

4. Verfahren nach Anspruch 3, bei dem der zeitliche Verlauf der Freisetzung bei der Bestimmung der bereitzustellenden Menge an Reduktionsmittel berücksichtigt wird.

5. Verfahren nach einem der vorhergehenden Ansprüche , bei dem bei einer erwarteten Senkung der Temperatur des Reduktionskatalysators (6) die in den Reduktionskatalysator (6) einzulagernde Menge an Reduktionsmittel berechnet und bei der Bereitstellung von Reduktionsmittel berücksichtigt wird.

6. Verfahren nach Anspruch 5, bei dem der zeitliche Verlauf der Einlagerung an Reduktionsmittel berechnet wird.

7. Verfahren nach Anspruch 6, bei dem der zeitliche Verlauf der Einlagerung bei der Bestimmung der bereitzustellenden Menge an Reduktionsmittel berücksichtigt wird.

8. Verfahren nach einem der vorhergehenden Ansprüche, bei dem das Reduktionsmittel auf mindestens eine der folgenden Arten bereitgestellt wird:
- Zugabe und zumindest teilweise Umsetzung eines Reduktionsmittelvorläufers zu Reduktionsmittel;
- Zugabe des Reduktionsmittels;
- Erzeugen und zumindest teilweise Umsetzung eines Reduktionsmittelvorläufers zu Reduktionsmittel und
- Erzeugen des Reduktionsmittels.

9. Vorrichtung zur Reduktion des Stickoxidanteils im Abgas einer Verbrennungskraftmaschine (1), zumindest umfassend einen Reduktionskatalysator (6), einen Partikelabscheider (4) und eine Steuereinrichtung (10), wobei die einrichtung (10) geeignet und bestimmt ist, das Verfahren nach einem der vorhergehenden Ansprüche durchzuführen.

## Claims

1. A method for reducing the nitrogen oxide proportion in the exhaust gas of an internal combustion engine (1) by a selective catalytic reduction at a reduction catalytic converter (6) by providing a reducing agent at least in a discontinuous manner; and **characterized in that** within the determination of the quantity (14, 15, 16) of the reducing agent to be provided a storage capacity (12, 13) of the reduction catalytic converter (6) and a dependency of the storage capacity (12, 13) on a temperature of the reduction catalytic converter (6) is taken into consideration, the method further comprises calculating the future temperature of the reduction catalytic converter (6) whereby at least one of the following items of information is taken into consideration:
- a regeneration behavior of a particle separator (4); and
- a loading of a particle separator (4),
whereby a regeneration of the particle separator (4) is carried out if the quantity of the reducing agent stored in the reduction catalytic converter (6) is less than or equal to a storage capacity (12, 13) at a maximum temperature, generated by the regeneration, in the reduction catalytic converter (6).

2. The method according to claim 1, which further comprises, in the event of an expected increase in the temperature of the reduction catalytic converter (6), calculating a resulting quantity of reducing agent released from the reduction catalytic converter (6), and taking the resulting quantity into consideration in the provision of the reducing agent.

3. The method according to claim 2, which further comprises calculating a time profile of the release of the reducing agent.

4. The method according to claim 3, which further comprises taking the time profile of the release into consideration in the determination of the quantity of reducing agent to be provided.

5. The method according to one of the preceding claims, which further comprises, in the event of an expected decrease in the temperature of the reduction catalytic converter (6), calculating the quantity of reducing agent to be stored in the reduction catalytic converter (6) and taking the calculated quantity into consideration in the provision of the reducing agent.

6. The method according to claim 5, which further comprises calculating a time profile of the storage of the reducing agent.

7. The method according to claim 6, which further comprises taking the time profile of the storage into consideration in the determination of the quantity of the reducing agent to be provided.

8. The method according to one of the preceding claims, which further comprises providing the reducing agent in at least one of the following ways:
- adding and at least partially converting a reducing agent precursor to form the reducing agent;
- adding the reducing agent;
- generating and at least partially converting a reducing agent precursor to form the reducing agent; and
- generating the reducing agent.

9. A device for reducing the nitrogen oxide proportion in the exhaust gas of an internal combustion engine (1), the device at least comprising a reduction catalytic converter (6), a particle separator (4) and a control device (10), the control device (10) is suitable and intended for carrying out the method according to one of the preceding claims.

## Revendications

1. Procédé de réduction de la fraction d'oxyde d'azote dans le gaz d'échappement d'une machine à combustion interne (1) par une réduction sélective catalytique sur un catalyseur de réduction (6) pour laquelle un agent réducteur est mis à disposition au moins de façon discontinue, **caractérisé en ce que** lorsque la quantité d'agent réducteur (14, 15, 16), devant être mise à disposition est déterminée, il est tenu compte d'une capacité d'accumulation (12, 13) du catalyseur de réduction (6) pour l'agent réducteur et la dépendance de cette capacité d'accumulation (12, 13) de la température du catalyseur de réduction (6) et procédé, dans lequel la température future du catalyseur de réduction (6) est calculée en tenant compte d'au moins une des informations suivantes :
- un comportement de régénération d'un séparateur de particules (4) ; et
- un chargement d'un séparateur de particules (4),
une régénération du séparateur de particules (4) étant effectuée, quand la quantité accumulée de l'agent réducteur dans le catalyseur de réduction (6) est plus petite ou correspond à la capacité d'accumulation (12, 13) lorsque la température maximale, créée par régénération dans le catalyseur de réduction (6) est atteinte.

2. Procédé selon la revendication 1, dans lequel, lors d'une augmentation attendue de la température du catalyseur de réduction (6), la quantité d'agent réducteur qui en résulte est calculée qui est libérée du catalyseur de réduction (6), et cette quantité en résultant est considérée lorsque l'agent réducteur est mis à disposition.

3. Procédé selon la revendication 2, dans lequel on calcule l'allure temporelle du dégagement d'agent réducteur.

4. Procédé selon la revendication 3, dans lequel il est tenu compte de l'allure temporelle du dégagement quant à la détermination de la quantité d'agent réducteur devant être mise à disposition.

5. Procédé selon l'une des revendications précédentes, dans lequel lors d'une baisse attendue de la température du catalyseur de réduction (6) la quantité d'agent réducteur devant être stockée dans le catalyseur de réduction (6) est calculée et est prise en considération lorsque l'agent réducteur est mis à disposition.

6. Procédé selon la revendication 5, dans lequel l'allure temporelle du stockage d'agent réducteur est calculée.

7. Procédé selon la revendication 6, dans lequel on tient compte de l'allure temporelle du stockage lorsque la quantité d'agent réducteur devant être mise à disposition est déterminée.

8. Procédé selon l'une des revendications précédentes, dans lequel l'agent réducteur est mis à disposition à la façon d'au moins une des possibilités suivantes :
- l'addition et au moins la transformation partielle d'un précurseur d'agent réducteur en agent réducteur ;
- l'addition de l'agent réducteur ;
- la création et la transformation au moins partielle d'un précurseur d'agent réducteur en agent réducteur et
- la création de l'agent réducteur.

9. Dispositif destiné à réduire la fraction d'oxyde d'azote dans le gaz d'échappement d'une machine à combustion interne (1), comprenant au moins un catalyseur de réduction (6), un séparateur de particules (4) et un dispositif de commande (10), le dispositif (10) étant approprié et destiné à mettre en oeuvre le procédé selon l'une des revendications précédentes.
